# EUROPÄISCHE PATENTANMELDUNG

(11) **EP 4 310 285 A1**
(43) Veröffentlichungstag der Anmeldung: **24.01.2024**
(21) Anmeldenummer: 23183284.1
(22) Anmeldetag: 04.07.2023
(51) Int. Cl.: E05D 15/30, E05F 15/63

(54) **SCHWENKTÜRANORDNUNG MIT ROLLENBOLZENSCHIENE IN OBERER PORTALLEISTE**

(30) Priorität: 19.07.2022 DE 202022104049 U
(71) Anmelder: Bode - Die Tür GmbH, 34123 Kassel (DE)
(72) Erfinder: Gibhardt, Nils, 34281 Gudensberg (DE); Brauer, Hans-Georg, 34260 Kaufungen (DE); Arend, Ulrich, 34576 Dickershausen (DE)
(74) Vertreter: Patentanwälte Bauer Vorberg Kayser

(57) **Zusammenfassung**

Die Erfindung betrifft eine Schwenktüranordnung für ein Fahrzeug mit einer Türöffnung (4), mit einem Türflügel (3) zum Öffnen und Verschließen der Türöffnung (4), und mit einer Drehsäulenanordnung zum Verstellen des Türflügels (3) zwischen einer Schließstellung und einer Öffnungsstellung, wobei die Drehsäulenanordnung eine zum Verstellen des Türflügels (3) schwenkbare Drehsäule (11) und einen Drehsäulenhebel (12) zum Koppeln der Drehsäule (11) mit dem Türflügel (3) aufweist, wobei der Türflügel (3) einen Rollenbolzen (13) aufweist, der in einer Rollenbolzenschiene (1) geführt wird, wobei die SchwenktürSchwenktüranordnung eine obere Portalleiste (6) umfasst, welche in einem oberen horizontalen Bereich (15) der Türöffnung (4) angeordnet ist.

Sie ist dadurch gekennzeichnet, dass die Rollenbolzenschiene (1) in der oberen Portalleiste (6) angeordnet ist.

## Beschreibung

Die Erfindung betrifft eine Schwenktüranordnung, insbesondere eine Innenschwenktüranordnung für ein Fahrzeug mit einer Türöffnung, welche mithilfe eines Türflügels verschlossen werden kann.

Schwenktüranordnungen und insbesondere Innenschwenktüren werden häufig in Fahrzeugen des öffentlichen Personennahverkehrs und Niederflurfahrzeugen wie zum Beispiel Bussen und Bahnen eingesetzt.

Schwenktüranordnungen weisen dazu herkömmlicherweise einen Portalrahmen auf, in dem wenigstens ein Türflügel, häufig zwei Türflügel geführt werden. Die Schwenktüranordnung wird oftmals mithilfe des Portalrahmens als eigenständige Baugruppe in eine Türöffnung in einer Außenhülle des Fahrzeuges eingesetzt.

Der Türflügel wird zum Öffnen und Verschließen der Türöffnung von einem Antrieb bewegt und durch Führungselemente geführt. Der Antrieb umfasst beispielsweise eine Drehsäule, welche durch einen Hydraulik- oder Pneumatik-Aktuator bewegt wird. Der Antrieb ist dazu in einem stabilen Antriebsträger der Schwenktüranordnung positioniert. Zur Anbindung an den Türflügel ist die Drehsäule über einen Drehsäulenhebel mit dem Türflügel verbunden.

Zur Führung des Türflügels wird der Türflügel über einen Rollenbolzen in einer Rollenbolzenschiene geführt. Damit die Rollenbolzenschiene die Kräfte des Türflügels aufnehmen kann, ist die Rollenbolzenschiene herkömmlicherweise in dem Antriebsträger angeordnet.

Der Antriebsträger mit der Rollenbolzenschiene ist weiter innen im Fahrzeug, also beabstandet zu der Außenhülle des Fahrzeugs angebracht, da der darauf montierte Aktuator einen gewissen Raum einnimmt und die Drehsäule über einen Hebel mit passender Kinematik anlenken muss.

Die Rollenbolzenschiene der Schwenktüranordnung trägt wesentlich zur Kinematik des sich bewegenden Türflügels bei. Während die Drehsäule um ihre eigene Achse rotiert und den Türflügel in Bewegung versetzt, führt die Rollenbolzenschiene den Rollenbolzen des Türflügels im Wesentlichen linear und führt den Türflügel während der Öffnung bzw. Schließung auf eine stabile Art und Weise.

Durch die Anordnung der Rollenbolzenschiene auf dem Antriebsträger weiter innen im Fahrzeug und beabstandet zur Außenhülle ergibt sich allerdings eine ungünstige Kinematik des Türflügels, da der Türflügel während des Öffnungs- bzw. Schließvorgangs zwischenzeitlich weit aus der Türöffnung bzw. über die Außenhülle des Fahrzeugs hinausragt.

Die zugrundeliegende Aufgabe der Erfindung eine Schwenktüranordnung besteht darin, eine optimierte Kinematik des Türflügels bereit zu stellen. Die Kinematik bzw. der Türflügel sollen dabei kostengünstig herstellbar sein. Weiterhin soll der Aufbau möglichst einfach und robust sein.

Diese Aufgabe wird durch eine Schwenktüranordnung mit den Merkmalen des Anspruchs 1 gelöst. Weitere, besonders vorteilhafte Ausgestaltungen der Erfindung offenbaren die jeweiligen Unteransprüche.

Demgemäß handelt es sich um eine Schwenktüranordnung, insbesondere um eine Innenschwenktür mit einem Türflügel zum Öffnen und Verschließen der Türöffnung, und mit einer Drehsäulenanordnung zum Verstellen des Türflügels zwischen einer Schließstellung und einer Öffnungsstellung, wobei die Drehsäulenanordnung eine zum Verstellen des Türflügels schwenkbare Drehsäule und einen Drehsäulenhebel zum Koppeln der Drehsäule mit dem Türflügel aufweist. Der Türflügel weist einen Rollenbolzen auf, der in einer Rollenbolzenschiene geführt wird, wobei die Schwenktüranordnung eine obere Portalleiste umfasst, welche in einem oberen horizontalen Bereich der Türöffnung angeordnet ist. Die erfindungsgemäße Schwenktüranordnung zeichnet sich erfindungsgemäß dadurch aus, dass die Rollenbolzenschiene in der oberen Portalleiste angeordnet ist.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Die Türöffnung ist in eine Wand des Fahrzeugs eingebracht. Die Wand wird durch eine Außenseite des Fahrzeugs und eine von der Außenseite beabstandete Innenseite des Fahrzeugs gebildet, so dass die Wand durch den Abstand der Außenseite von der Innenseite eine gewisse Wandstärke aufweist. Die Außenseite kann auch als Außenhülle bezeichnet werden. Die Türöffnung ist als Aussparung in die Wand des Fahrzeugs eingebracht und reicht von der Außenhülle bis zur Innenseite. Die Türöffnung weist eine sich in waagerechter Richtung erstreckende Breite und eine sich in senkrechter Richtung erstreckende Höhe auf. Aufgrund der Wandstärke weist die Türöffnung daher auch eine sich in waagerechter Richtung von der Außenhülle zur Innenseite erstreckende Tiefe auf, die jedoch wesentlich geringer als die Breite und die Höhe ist und der Wandstärke des Fahrzeugs entspricht.

Die Türöffnung kann mit einem oder mehreren Türflügeln verschlossen oder geöffnet werden. Dazu kann der Türflügel in eine Schließstellung, in welcher die Türöffnung verschlossen ist, und in einer Öffnungsstellung, in welcher die Türöffnung nicht verschlossen ist, gebracht werden.

Die Kontur des Türflügels ist in der Regel im Wesentlichen rechteckig. Der Türflügel weist daher eine sich horizontal erstreckende Breite, eine sich senkrecht erstreckende Höhe und eine gewisse Dicke auf, die wesentlich geringer als die Breite und die Höhe ist. Die Dicke des Türflügels kann der Tiefe der Türöffnung entsprechen, muss dies aber nicht. Da der Türflügel eine Dicke aufweist, weist der Türflügel innere und äußere Kanten auf, wobei die äußeren Kanten in Schließstellung des Türflügels mit der Außenhülle des Fahrzeugs fluchten, während die inneren Kanten in Schließstellung des Türflügels waagerecht in Richtung des Inneren des Fahrzeugs versetzt angeordnet sind. Sofern die die äußeren Kanten mit der Außenhülle in Schließstellung des Türflügels fluchten, wird darunter verstanden, dass der Türflügel zu der Außenhülle fluchtend angeordnet ist. Um den Türflügel zwischen der Öffnungsstellung und der Schließstellung zu bewegen, umfasst die Schwenktüranordnung eine Drehsäulenanordnung mit einer Drehsäule. Die Drehsäule ist mithilfe eines Drehsäulenhebels an den Türflügel gekoppelt. Wird die Drehsäule durch einen Antrieb gedreht, wird die Tür bewegt.

Damit die Tür eine bestimmte Bewegung, nämlich eine Schwenk -Bewegung, beim Öffnen und Schließen ausführt, wird der Türflügel zusätzlich über Führungselemente geführt. Zur Führung ist an dem Türflügel ein Rollenbolzen in Form einer Rolle oder eines Rades vorgesehen, welcher drehbar um eine Drehachse mit dem Türflügel verbunden ist. Der Rollenbolzen ist in einer Rollenbolzenschiene geführt, die sich im Wesentlichen linear erstreckt.

Die Schwenktüranordnung umfasst eine obere Portalleiste. Die obere Portalleiste ist im oberen horizontalen Bereich der Türöffnung angeordnet, wobei sich dieser obere horizontale Bereich der Türöffnung gegenüberliegend eines Fußbodens des Fahrzeugs bzw. einer Türschwelle befindet.

Die obere Portalleiste ist insbesondere in horizontaler Richtung in einem Abstand von der Außenhülle des Fahrzeugs in Richtung eines Inneren des Fahrzeugs von weniger als 5cm, insbesondere weniger als 3cm, und insbesondere weniger als 1cm angeordnet, und ragt nicht über die Außenhülle des Fahrzeugs hinaus.

Die Rollenbolzenschiene ist in der oberen Portalleiste angeordnet. Ein Kerngedanke der Erfindung ist es, dass die Rollenbolzenschiene nah an der Außenhülle des Fahrzeugs angeordnet ist, damit die Kinematik des Türflügels verbessert wird. Durch die Anordnung der Rollenbolzenschiene in der Nähe der Außenhülle, weist der Rollenbolzen nur einen geringen Abstand zum Türflügel auf, oder kann sogar fluchtend auf dem Türflügel montiert werden. Der Drehpunkt in Form des Rollenbolzens, um den sich der Türflügel beim Öffnen und Schließen dreht, ist somit nahe an der Hauptschließkante der Schwenktüranordnung angeordnet, so dass das Türblatt beim Öffnungs- bzw. Schließvorgang nicht oder nur sehr wenig aus der Außenhülle des Fahrzeugs herausragt.

Als Hauptschließkante einer Tür wird die in Schließrichtung der Tür vordere senkrecht verlaufende Kante bezeichnet. Bei der Verwendung von zwei Türflügeln sind dies also die in geschlossener Stellung der Türflügel aneinander liegenden Kanten, bei nur einem Türflügel liegt die Hauptschließkante bei geschlossener Position der Tür entsprechend an der sich senkrecht erstreckenden Türöffnungskante an. Die in Schließrichtung des Türflügels hintere senkrecht verlaufende Kante wird als Nebenschließkante bezeichnet.

Ein weiterer Vorteil der Erfindung besteht darin, dass der Abstand zwischen Türflügel und Portalleiste auch bei verschiedenen Fahrzeugmodellen stets einheitlich sein kann, was für den Rollenbolzen und den Rollenbolzenhalter zu einer geringeren Varianz führt.

Im Vergleich zu der herkömmlichen Schwenktüranordnung aus dem Stand der Technik, bei der die Rollenbolzenschiene auf dem Antriebsträger zusammen mit dem Antriebs-Aktuator angeordnet ist, ist die Rollenbolzenschiene in der erfindungsgemäßen Schwenktüranordnung an der oberen Portalleiste und damit deutlich näher an der Außenhülle des Fahrzeugs positioniert, als das im Stand der Technik der Fall ist. Gleichzeitig liegt die Rollenbolzenschiene auch näher an der Hauptschließkante der Schwenktüranordnung. Durch diese Faktoren ist die Kinematik des Türflügels deutlich verbessert.

In einer bevorzugten Ausführungsform der Schwenktüranordnung ist die Rollenbolzenschiene horizontal in einem in einer waagerechten Richtung und senkrecht zur Außenhülle gemessenen Abstand von weniger als 10 cm von einer Außenhülle des Fahrzeugs angeordnet.

Um das zwischenzeitliche Herausragen des Türflügels über die Außenhülle des Fahrzeugs hinaus beim Öffnen und Schließen gering zu halten, bietet es sich an, einen in einer waagerechten Richtung und senkrecht zur Außenhülle gemessenen Abstand von weniger als 10 cm zwischen der Drehachse des Rollenbolzens und der Außenhülle des Fahrzeugs zu wählen.

Kann der Abstand bauartbedingt weiter verringert, so ergibt sich bei ansonsten unveränderten Parametern der Hebelmechanik des Türflügels ein noch geringeres Herausragen des Türflügels über die Außenhülle des Fahrzeugs hinaus während der Bewegung des Türflügels. Daher beträgt der Abstand erfindungsgemäß insbesondere weniger als 8 cm, insbesondere weniger als 5 cm, und insbesondere weniger als 2 cm zwischen Drehachse des Rollenbolzens und der Außenhülle des Fahrzeugs.

Ein Abstand zwischen Drehachse und Außenhülle des Fahrzeugs in Abhängigkeit des Rollenbolzendurchmessers ist im Sinne der Skalierbarkeit ebenfalls denkbar. Daher beträgt der Abstand insbesondere weniger als das 8-Fache des Durchmesser des Rollenbolzens, und insbesondere weniger als das 5-Fache, das 3-Fache, oder das 1-Fache des Durchmessers des Rollenbolzens.

In einer vorteilhaften Ausführungsform der Schwenktüranordnung erstreckt sich die Rollenbolzenschiene im oberen Bereich der Türöffnung entlang einer oberen horizontalen Kante der Türöffnung.

Die obere horizontale Kante der Türöffnung kann in der Außenhülle des Fahrzeugs liegen und insbesondere in Fahrtrichtung des Fahrzeugs ausgerichtet sein. Ihr gegenüberliegend ist eine untere horizontale Kante der Türöffnung, die ebenfalls in der Außenhülle angeordnet ist, und welche Teil des Fußbodens des Fahrzeuges bzw. Teil einer Türschwelle der Türöffnung ist.

Es bietet sich an, die Rollenbolzenschiene nicht nur entlang sondern insbesondere parallel zu der oberen horizontalen Kante anzuordnen, da so der Rollenbolzen entlang der Türöffnung insbesondere linear geführt wird.

Insbesondere beträgt der horizontale Abstand zwischen der Rollenbolzenschiene und der oberen horizontalen Kante weniger als 8 cm, 5 cm, oder 2 cm. Insbesondere beträgt der Abstand mit Bezug auf den Rollendurchmesser weniger als das 8-Fache, das 5-Fache, das 3-Fache, oder das 1-Fache des Durchmessers des Rollenbolzens.

Vorteilhafterweise kann die Rollenbolzenschiene in Schließstellung des Türflügels oberhalb des Türflügels und fluchtend mit dem Türflügel angeordnet sein.

In Schließstellung fluchtet der Türflügel mit der Außenhülle des Fahrzeugs ohne dabei über die Außenhülle des Fahrzeugs hinaus zu ragen. Wird also die Rollenbolzenschiene oberhalb des Türflügels und fluchtend mit diesem angeordnet, so ist die Rollenbolzenschiene direkt an der Außenhülle des Fahrzeugs positioniert, ohne dass die Rollenbolzenschiene aus dem Fahrzeug bzw. dessen Außenhülle hervorsteht.

Der Rollenbolzen ist daher insbesondere oben auf dem Türflügel und fluchtend mit dem Türflügel angeordnet.

In einer vorteilhaften Ausführungsform der Schwenktüranordnung ist der Rollenbolzen in horizontaler Richtung mit einem in waagerechter Richtung gemessenen Abstand von weniger als 10 cm von einer äußeren oberen horizontalen Kante des Türflügels angeordnet. Der Rollenbolzen kann dazu auf einem Rollenbolzenhalter befestigt sein, über den der Rollenbolzen beabstandet an dem Türflügel befestigt werden kann.

Die Kontur des Türflügels ist, wie zuvor bereits beschrieben, in der Regel im Wesentlichen rechteckig. Der Türflügel weist daher eine sich horizontal erstreckende Breite, eine sich senkrecht erstreckende Höhe und eine gewisse Dicke auf, die wesentlich geringer als die Breite und die Höhe ist. Die äußere obere horizontale Kante des Türflügels ist demnach an einem oberen Ende des Türflügels und entlang der Breite des Türflügels gelegen, und fluchtet in Schließstellung des Türflügels mit der Außenhülle des Fahrzeugs. Da der Türflügel eine Dicke aufweist, weist der Türflügel auch eine zu der äußeren oberen horizontalen Kante parallele innere obere horizontale Kante auf, die im Vergleich zur äußeren oberen horizontalen Kante nicht mit der Außenhülle in Schließstellung des Türflügels fluchtet, sondern in Schließstellung des Türflügels in Richtung des Inneren des Fahrzeugs versetzt ist.

Daher handelt es sich bei der hier genannten äußeren oberen horizontalen Kante des Türflügels insbesondere um die äußere obere horizontale Kante des Türflügels, die zu der Außenhülle des Fahrzeugs in Schließstellung des Türflügels fluchtend angeordnet ist. In diesem Fall entspricht der Abstand des Rollenbolzens zur oberen horizontalen Kante des Türflügels dem Abstand des Rollenbolzens zur Außenhülle des Fahrzeugs, und zwar waagerecht in Richtung des Inneren des Fahrzeuges gemessen, sofern sich der Türflügel im Schließzustand befindet. Der Abstand kann so gewählt werden, dass der Rollenbolzen innerhalb der Außenhülle des Fahrzeugs angeordnet ist.

Die Position des Rollenbolzens auf dem Türflügel bestimmt zusammen mit der Position der Rollenbolzenschiene in der Türöffnung die Bewegungen und die Endpositionen der Tür. Wichtig ist unter anderem, dass der Türflügel in seiner Schließstellung bündig mit der Außenhülle des Fahrzeugs abschließt. Die Rollenbolzenschiene soll möglichst nah an der Außenhülle bzw. möglichst nah an der Hauptschließkante des Fahrzeugs angeordnet sein, da dadurch die Kinematik des Türflügels derart optimiert wird, dass der Türflügel beim Bewegen zwischen Schließzustand und Öffnungszustand möglichst wenig über die Außenhülle hinausragt. Demnach muss also auch der Rollenbolzen möglichst nah an der Außenhülle des Fahrzeugs und damit möglichst in der Nähe der äußeren oberen horizontalen Kante des Türflügels angeordnet werden.

Daher ist der Rollenbolzen insbesondere in einem Abstand von weniger als 8 cm, weniger als 5 cm, oder weniger als 2 cm zur äußeren oberen horizontalen Kante des Türflügels angeordnet. In Relation zum Durchmesser des Rollenbolzens ausgedrückt, beträgt der Abstand insbesondere weniger als das 8-Fache, weniger als das 5-fache, weniger als das 3-Fache, oder weniger als das 1-Fache des Durchmessers des Rollenbolzens.

Der Rollenbolzen ist vorteilhafterweise in einer horizontalen Richtung in einem Abstand von weniger als 10 cm zu einer senkrechten äußeren Kante des Türflügels versetzt angeordnet.

Insbesondere liegt die senkrechte äußere Kante des Türflügels in der Hauptschließkante der Schwenktüranordnung. Insofern ist der Rollenbolzen in horizontaler Richtung in einem Abstand von weniger als 10 cm zur Hauptschließkante der Schwenktüranordnung auf dem Türflügel angeordnet.

Durch die Anordnung des Rollenbolzens nahe der senkrechten Kante bzw. nahe der Hauptschließkante der Schwenktüranordnung ist der Drehpunkt des Türflügels um die Drehachse des Rollenbolzen so angeordnet, dass das Türblatt beim Öffnungs- bzw. Schließvorgang nicht oder nur sehr wenig aus der Fahrzeugkontur, also über die Außenhülle des Fahrzeugs herausragt.

Daher ist der Rollenbolzen insbesondere in horizontaler Richtung in einem Abstand von weniger als 8 cm, weniger als 5 cm, oder weniger als 2 cm zur senkrechten Kante des Türflügels bzw. zur Hauptschließkante der Schwenktüranordnung angeordnet. In Relation zum Durchmesser des Rollenbolzens ausgedrückt beträgt der Abstand insbesondere weniger als das 8-Fache, weniger als das 5-fache, weniger als das 3-Fache, oder weniger als das 1-Fache des Durchmessers des Rollenbolzens.

Der Rollenbolzen kann vorzugsweise eine senkrechte Drehachse aufweisen. Durch eine senkrechte Ausrichtung der Drehachse des Rollenbolzens und dem senkrecht stehenden Türflügel können die auftretenden Kräfte auf den Türflügel optimal von dem Rollenbolzen in die Rollenbolzenschiene übertragen und von dieser aufgenommen werden.

Die Schwenktüranordnung kann vorteilhafterweise an der Rollenbolzenschiene eine Dichtlippe aufweisen, welche die Türöffnung in Schließstellung des Türflügels zum Türflügel abdichtet. Zwischen Türflügel und Türöffnung ist in der Regel ein Spalt vorgesehen, der die Bewegung des Türflügels in der Türöffnung ermöglicht, ohne dass der Türflügel an der Türöffnung schleift oder anschlägt. Das führt jedoch dazu, dass in diesem Bereich die Türöffnung nicht dicht abgeschlossen ist.

Zur Abdichtung dieses Spaltes wird im Stand der Technik herkömmlicherweise eine Besen- oder Borstenleiste verwendet, die an der Türöffnung befestigt ist, und den Spalt zwischen Türöffnung und Türflügel abdeckt. Dazu ragt die Besen- oder Borstenleiste ausgehend von der Türöffnung über den Türflügel. Da der Türflügel aber beim Öffnen und Schließen einer herkömmlichen Schwenktüranordnung weit über die Außenhülle des Fahrzeugs und damit über die Türöffnung hinausragt, muss die Besen- oder Borstenleiste entsprechend stark nachgeben, was den Verschleiß deutlich erhöht.

Da der Türflügel der erfindungsgemäßen Schwenktüranordnung jedoch deutlich weniger oder gar nicht mehr über die Außenhülle des Fahrzeugs hinausragt, kann in diesem Bereich vorteilhafter Weise eine insbesondere durchgängige Dichtlippe aus Gummi statt einer Besen- oder Borstenleiste verwendet werden. In dieser Anordnung ist der Verschleiß an der Dichtlippe gegenüber dem Verschleiß der Besen- oder Borstenleiste aus dem Stand der Technik deutlich reduziert und der Spalt zwischen Türöffnung und Türflügel kann besser abgedichtet werden.

Die vorliegende Erfindung wird nachfolgend anhand von Ausführungsbeispielen unter Bezugnahme auf die beigefügten Figuren eingehend erläutert. Es zeigen:
- Figur 1: eine beispielhafte Türöffnung in einem Fahrzeug,
- Figur 2: eine Draufsicht einer Schwenktüranordnung aus dem Stand der Technik, mit einer Rollenbolzenschiene auf einem Antriebsträger in einer Schließstellung,
- Figur 3: die Schwenktüranordnung aus dem Stand der Technik aus Fig. 2, in einer Stellung zwischen einer Öffnungs- und der Schließstellung,
- Figur 4: die Schwenktüranordnung aus dem Stand der Technik aus Fig. 2, in der Öffnungsstellung,
- Figur 5: eine Draufsicht auf eine Ausführungsform der erfindungsgemäßen Schwenktüranordnung mit einer Rollenbolzenschiene angeordnet an einer oberen Portalleiste in einer Schließstellung,
- Figur 6: die Ausführungsform der erfindungsgemäßen Schwenktüranordnung aus Fig. 5 in einer Stellung zwischen einer Öffnungs- und der Schließstellung,
- Figur 7: die Ausführungsform der erfindungsgemäßen Schwenktüranordnung aus Fig. 5 in der Öffnungsstellung,
- Figur 8: eine Schnittdarstellung in Seitenansicht einer oberen Portalleiste mit Rollenbolzenschiene der Ausführungsform der Schwenktüranordnung aus Fig. 5.

In den Figuren bezeichnen - soweit nicht anders angegeben - gleiche Bezugszeichen gleiche oder einander entsprechende Komponenten mit gleicher Funktion.

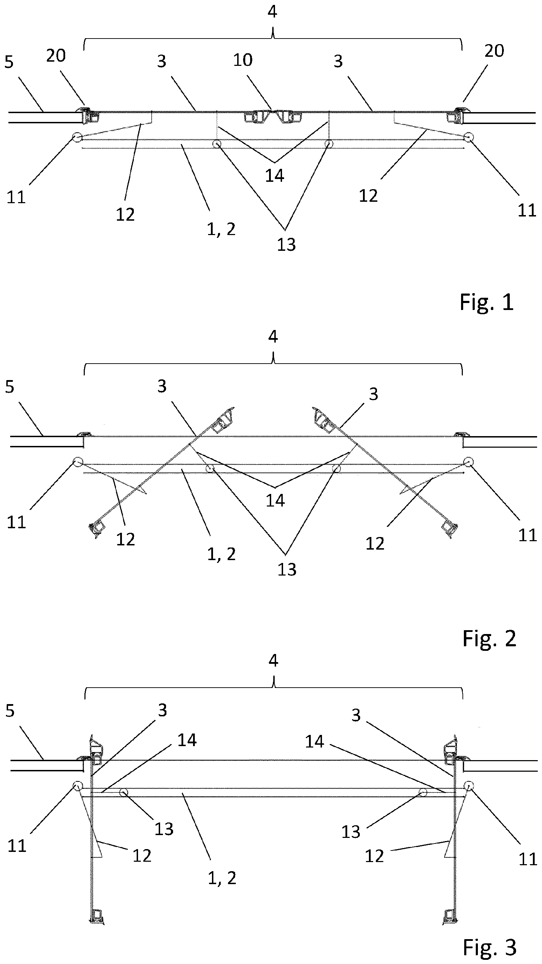

Fig. 1 zeigt schematisch eine Türöffnung 4, die von einer erfindungsgemäßen Schwenktüranordnung mit zwei Türflügeln 3 verschlossen ist. Die Türöffnung 4 ist als im Wesentlichen rechteckiger Ausschnitt in der Außenhülle 5 des Fahrzeugs eingebracht. Das Fahrzeug hat ausgehend von der Außenhülle 5 eine Wandung mit einer gewissen Dicke 9, wobei die Dicke relativ zu einer senkrechten Höhe 7 und einer horizontalen Breite 8 der Türöffnung 4 vernachlässigbar klein ist. Die Wandung des Fahrzeugs trennt einen Innenraum des Fahrzeugs von seiner Umgebung.

Der obere horizontale Bereich 15 der Türöffnung 4 liegt dabei einem unteren Fußbodenbereich 19 der Türöffnung gegenüber. Der Fußbodenbereich 19 entspricht dabei einer Türschwelle der Türöffnung 4.

Zwischen den beiden Türflügeln 3 befindet sich die Hauptschließkante 10, und zwischen den senkrechten Bereichen der Türflügel 3 und der Türöffnung 4 befinden sich die Nebenschließkanten 20.

Die Fig. 2 bis 4 zeigen jeweils eine Draufsicht einer Schwenktüranordnung aus dem Stand der Technik, mit einer Rollenbolzenschiene 1 auf einem Antriebsträger 2.

Die Schwenktüranordnung umfasst zwei Türflügel 3, die eine Türöffnung 4 eines Fahrzeugs verschließen. Die beiden Türflügel 3 bilden eine in Schließrichtung vorne angeordnete Hauptschließkante 10 aus, an der sich die beiden Türflügel 3 in geschlossener Stellung berühren. In Schließrichtung hinten sind die Nebenschließkanten 20 angeordnet, sie berühren in Schließstellung der Türflügel 3 jeweils eine Innenkante der Türöffnung 4.

Zum Bewegen der Türflügel 3 weist die Schwenktüranordnung jeweils eine Drehsäule 11 für die Türflügel 3 auf. Die Drehsäulen 11 sind jeweils über einen Drehsäulenhebel 12 mit den Türflügeln 3 verbunden. Die beiden Drehsäulen 12 werden über nicht dargestellte Aktuatoren angetrieben.

Die Türflügel 3 müssen zusätzlich zu den Drehsäulenhebeln 12 durch weitere Führungselemente geführt werden, damit sie eine definierte Schwenk- Bewegung ausführen. Dazu sind Rollenbolzen 13 auf Rollenbolzenhaltern 14 an den Türflügeln 3 befestigt, wobei die Rollenbolzen 13 drehbar um Drehachsen 16 gelagert sind. Die Rollenbolzen 13 werden jeweils in einer Rollenbolzenschiene 1 geführt, die mit dem Fahrzeug fest verbunden ist.

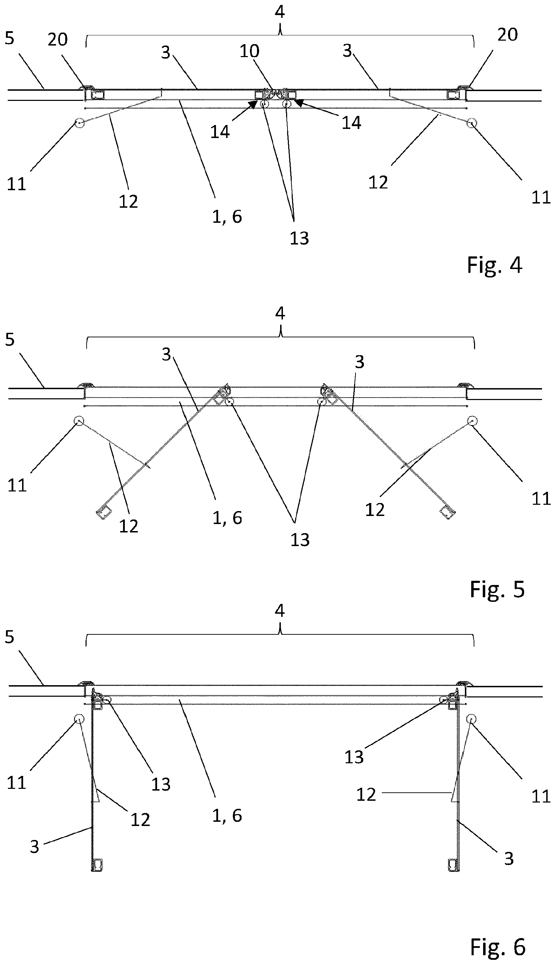

Bis hierhin ist der grundlegende Aufbau der Schwenktüranordnungen aus dem Stand der Technik und der in den Fig. 4 bis 6 gezeigten erfindungsgemäßen Ausführungsform der Schwenktüranordnung gleich aufgebaut.

In Fig. 2 ist zu erkennen, dass die Rollenbolzenschiene 1 deutlich beabstandet von der Außenhülle 5 des Fahrzeugs auf dem Antriebsträger 2 angeordnet ist. Gut zu erkennen ist dies zum Beispiel an der Länge des Rollenbolzenhalters 14. In horizontaler Richtung ist der Rollenbolzen 13 jeweils beabstandet zur Hauptschließkante 10 der Schwenktüranordnung angeordnet. Die Folgen dieser Anordnung des Rollenbolzens 13 relativ zu der Hauptschließkante 10 bzw. zu der Außenhülle 5 des Fahrzeugs für die Kinematik des Türflügels 3 sind in Fig. 2 zu sehen.

Fig. 3 zeigt die Schwenktüranordnung aus dem Stand der Technik aus Fig. 2 in einer Stellung zwischen der Öffnungs- und der Schließstellung. Durch den Abstand der Rollenbolzenschiene 1 zur Außenhülle 5 des Fahrzeugs bzw. zur Hauptschließkante 10 und den daher entsprechend langen Rollenhalter 14 schwenkt der Türflügel 3 in dieser Stellung zwischen der Öffnungs- und der Schließstellung deutlich über die Außenhülle 5 des Fahrzeugs hinaus.

Fig. 4 zeigt die Schwenktüranordnung aus dem Stand der Technik aus Fig. 2, in der Öffnungsstellung. Auch im geöffneten Zustand der Schwenktüranordnung aus dem Stand der Technik stehen die Türflügel 3 über die Außenhülle 5 hinaus.

Die Fig. 5 bis 7 zeigen jeweils eine Draufsicht einer Ausführungsform einer erfindungsgemäßen Schwenktüranordnung, bei der die Rollenbolzenschiene 1 in einer oberen Portalleiste 6 angeordnet ist. Der grundlegende Aufbau ist dem Aufbau der Schwenktüranordnung aus dem Stand der Technik aus den Fig. 2 bis 4 zwar sehr ähnlich, trotzdem führt der erfindungsgemäße Aufbau zu deutlichen Vorteilen.

In den Fig. 5 bis 7 fallen die Portalleiste 6 und die Rollenbolzenschiene 1 aufgrund der schematischen Darstellungsweise zusammen und sind nicht getrennt voneinander dargestellt. Fig. 5 ist zu entnehmen, dass die obere Portalleiste 6 nah an der Außenhülle 5 und im oberen Bereich der Türöffnung 15 angeordnet ist.

Zu erkennen ist, dass die Rollenbolzenschiene 1 somit wesentlich näher an der Außenhülle 5 des Fahrzeugs platziert ist als in der Schwenktüranordnung aus dem Stand der Technik und die Rollenbolzenhalter 14 entsprechend kurz gehalten sind. Der Rollenbolzen 13 ist auch sehr viel näher an der Hauptschließkante 10 der Schwenktüranordnung angeordnet. Die Auswirkungen auf die Kinematik der Türflügel 3 sind in Fig. 6 zu erkennen.

Fig. 6 zeigt die Ausführungsform der erfindungsgemäßen Schwenktüranordnung aus Fig. 5 in einer Stellung zwischen der Öffnungs- und der Schließstellung. Die Türflügel 3 stehen in dieser Stellung nur unwesentlich über die Außenhülle 5 des Fahrzeugs hinaus, so dass in dieser Hinsicht die Kinematik der Türflügel 3 im Gegensatz zu der Schwenktüranordnung aus dem Stand der Technik deutlich verbessert ist.

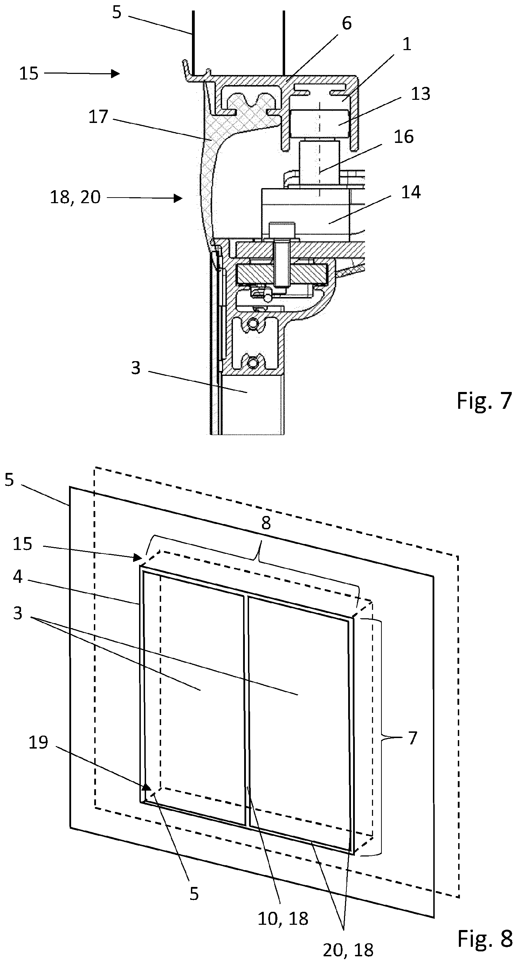

Fig. 7 zeigt die Ausführungsform der erfindungsgemäßen Schwenktüranordnung aus Fig. 5 in der Öffnungsstellung. In der Öffnungsstellung der Schwenktüranordnung stehen die Türflügel 3 im Gegensatz zur Ausführung nach dem Stand der Technik vorteilhafterweise überhaupt nicht mehr über die Außenhülle 5 des Fahrzeugs hinaus.

Fig. 8 zeigt eine Schnittdarstellung in Seitenansicht der oberen Portalleiste 6 mit Rollenbolzenschiene 1 der Ausführungsform der Schwenktüranordnung aus Fig. 5. Die Rollenbolzenschiene 1 ist Teil der oberen Portalleiste 6 und damit nah an der Außenhülle 5 des Fahrzeugs. In der Rollenbolzenschiene 1 ist der Rollenbolzen 13 geführt, welcher auf der Drehachse 16 drehbar gelagert ist. Der Rollenbolzen 13 ist über den Rollenbolzenhalter 14 mit dem Türflügel 3 verbunden.

Die obere Portalleiste 6 nimmt eine Dichtlippe 17 auf, die dazu dient einen Spalt 18 zwischen Türflügel 3 und Türöffnung 4 im geschlossenen Zustand der Schwenktüranordnung abzudichten. Da die Türflügel 3 in ihrer Bewegung zwischen der Öffnungs- und der Schließstellung kaum über die Außenhülle 5 hinausragen und die Dichtlippe 17 dabei kaum verformen, kann die Dichtlippe 17 entsprechend steif ausgestaltet werden, um so eine bessere Dichtwirkung zu erzielen.

### Bezugszeichenliste

- 1: Rollenbolzenschiene
- 2: Antriebsträger
- 3: Türflügel
- 4: Türöffnung
- 5: Außenhülle
- 6: obere Portalleiste
- 7: Höhe
- 8: Breite
- 9: Dicke
- 10: Hauptschließkante
- 11: Drehsäule
- 12: Drehsäulenhebel
- 13: Rollenbolzen
- 14: Rollenbolzenhalter
- 15: oberer Bereich der Türöffnung
- 16: Drehachse
- 17: Dichtlippe
- 18: Spalt
- 19: Fußbodenbereich der Türöffnung
- 20: Nebenschließkanten

## Patentansprüche

1. Schwenktüranordnung für ein Fahrzeug mit einer Türöffnung (4), mit einem Türflügel (3) zum Öffnen und Verschließen der Türöffnung (4), und mit einer Drehsäulenanordnung zum Verstellen des Türflügels (3) zwischen einer Schließstellung und einer Öffnungsstellung, wobei die Drehsäulenanordnung eine zum Verstellen des Türflügels (3) schwenkbare Drehsäule (11) und einen Drehsäulenhebel (12) zum Koppeln der Drehsäule (11) mit dem Türflügel (3) aufweist, wobei der Türflügel (3) einen Rollenbolzen (13) aufweist, der in einer Rollenbolzenschiene (1) geführt wird, wobei die SchwenktürSchwenktüranordnung eine obere Portalleiste (6) umfasst, welche in einem oberen horizontalen Bereich (15) der Türöffnung (4) angeordnet ist,
**dadurch gekennzeichnet, dass**
die Rollenbolzenschiene (1) in der oberen Portalleiste (6) angeordnet ist.

2. Schwenktüranordnung nach dem vorhergehenden Anspruch,
**dadurch gekennzeichnet, dass**
die Rollenbolzenschiene (1) horizontal in einem in waagerechter Richtung gemessenen Abstand von weniger als 10 cm von einer Außenhülle (5) des Fahrzeugs angeordnet ist.

3. Schwenktüranordnung nach einem der vorhergehenden Ansprüche,
**dadurch gekennzeichnet, dass**
sich die Rollenbolzenschiene (1) entlang einer oberen horizontalen Kante der Türöffnung (4) erstreckt.

4. Schwenktüranordnung nach einem der vorhergehenden Ansprüche,
**dadurch gekennzeichnet, dass**
die Rollenbolzenschiene (1) in Schließstellung des Türflügels (3) auf dem Türflügel (3) und fluchtend mit dem Türflügel (3) angeordnet ist.

5. Schwenktüranordnung nach einem der vorhergehenden Ansprüche,
**dadurch gekennzeichnet, dass**
der Rollenbolzen (13) in horizontaler Richtung mit einem Abstand von weniger als 10 cm von einer äußeren oberen horizontalen Kante des Türflügels (3) angeordnet ist, und insbesondere die äußere obere horizontale Kante in einer Schließstellung des Türflügels (3) zu einer Außenhülle (5) des Fahrzeugs fluchtend angeordnet ist.

6. Schwenktüranordnung nach einem der vorhergehenden Ansprüche,
**dadurch gekennzeichnet, dass**
der Rollenbolzen (13) in einer horizontalen Richtung in einem Abstand von weniger als 10 cm zu einer Hauptschließkante (10) der Schwenktüranordnung versetzt ist.

7. Schwenktüranordnung nach einem der vorhergehenden Ansprüche,
**dadurch gekennzeichnet, dass**
der Rollenbolzen (13) eine senkrechte Drehachse (16) aufweist.

8. Schwenktüranordnung nach einem der vorhergehenden Ansprüche,
**dadurch gekennzeichnet, dass**
an der Rollenbolzenschiene (1) eine Dichtlippe (17) angeordnet ist, welche die Türöffnung (4) in Schließstellung des Türflügels (3) zum Türflügel (3) hin abdichtet.
